# EUROPEAN PATENT SPECIFICATION

(11) **EP 3 280 971 B1**
(45) Date of publication and mention of the grant of the patent: **17.06.2020**
(21) Application number: 15748015.3
(22) Date of filing: 31.07.2015
(51) Int. Cl.: G01B 11/06, B41F 33/00

(54) **CALCULATION OF LAYER THICKNESS**
BERECHNUNG DER SCHICHTDICKE
CALCUL D'ÉPAISSEUR DE COUCHE

(43) Date of publication of application: 14.02.2018
(73) Proprietor: HP INDIGO B.V., 1187 XR Amstelveen (NL)
(72) Inventor: MOSHEL, Avishai, 76101 Nes Ziona (IL)
(74) Representative: HGF Limited
(86) International application number: PCT/EP2015/067745
(87) International publication number: WO 2017/020943

(56) References cited:
- WO-A2-2011/014282
- US-A- 5 493 401
- US-A1- 2005 095 730
- US-A1- 2014 239 181

## Description

### BACKGROUND

Film thickness may be monitored in some applications. For example printing fluid (e.g. ink) film thickness, may be monitored in imaging systems such as printers or presses. US 2005095730 relates to monitoring film thickness, manufacturing a semiconductor device. US 2014239181 relates to a film thickness measurement method.

### BRIEF DESCRIPTION OF THE DRAWINGS

Examples of the invention, which is defined by the claims, are further described hereinafter with reference to the accompanying drawings, in which:
Figures 1a and 1b illustrate examples of arrangements for measuring a layer thickness.
Figures 2a and 2b illustrate example arrangements of layers on a substrate.
Figure 3a and 3b schematically illustrate an example of an apparatus for measurement of the thickness of a layer.
Figure 4 illustrates a method according to an example.
Figure 5 illustrates a method according to an example.
Figure 6 shows an example of a relationship between layer thickness and difference in optical density (ΔOD).

### DETAILED DESCRIPTION

Determining layer thickness is useful in various applications. Printing fluid (e.g. ink) layers are an example of such layers. Printing fluid layer thickness may be measured by measuring the optical density of the layer, however measurement of transparent printing fluid layers (or other transparent layers) in this manner is not always possible, as a transparent printing fluid layer may not reflect light.

Transparent printing fluids have many applications. For example, they may be used as a protective layer on a substrate, or for visual effects (such as affecting the gloss level of a print).

Deviation from a target layer thickness of transparent printing fluid on a substrate may lead to negative effects. Monitoring and/or determining a layer thickness may assist in detecting deviation from a target thickness and/or assist in controlling a layer to be within a target thickness range. A too thick or too thin layer may not produce the desired visual effect, or protective capability. Furthermore, a too thick layer may add a significant cost to the printing process, as more printing fluid will be used.

In some imaging systems for producing an image on a medium (e.g. printers or presses) a calibration process may be carried out for ensuring that correct amounts of printing fluid (e.g. ink) are deposited on the medium. This helps to ensure a correct (target) layer thickness with proper physical properties. Such a calibration may be performed the first time the particular printing fluid is used with the imaging system, or if there is a change in conditions. This helps to ensure that a target thickness of the printing fluid is maintained. According to some examples, such a calibration may be performed for a transparent printing fluid. The calibration for the transparent printing fluid may be analogous to a calibration for a non-transparent printing fluid and use similar or the same sensing equipment.

In the following description, ink is used as an example of a printing fluid.

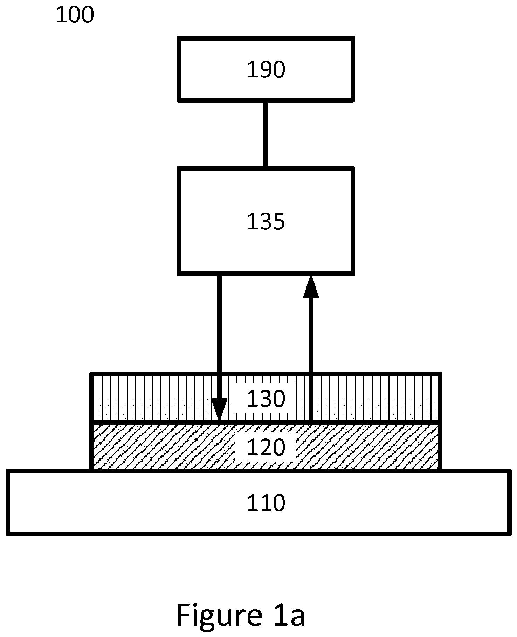

Figure 1a schematically illustrates some examples according to the invention of a system 100 to measure the thickness of layer 130, referred to herein as second layer 130. Figure 1a includes processing circuitry 190. The processing circuitry 190 is configured to receive data, from a measurement device 135, the data indicative of a first measurement of a measurement region of a substrate 110, the measurement region having a first layer 120 and the second layer 130, with the second layer 130 provided above the first layer 120 in relation to the substrate 110. The second layer 130 is a transparent or translucent layer. The presence of the second layer 130 may alter the apparent optical density of the first layer 120. The first measurement is indicative of an optical density associated with the first layer 120, e.g. may relate to the optical density of the first layer 120 in the presence of the second layer 130, or the optical density of the combination of the first layer 120 and second layer 130. The measured optical density is associated with the first layer 120 if the first layer has an effect on the measured value of the optical density. The thickness of the second layer 130 may be calculated based on the optical density associated with the first layer 120.

In some examples a second measurement may be taken. The second measurement may measure the optical density of the first layer 120 in the absence of the second layer 130, e.g. at a reference region. In some examples the calculation, by the processing circuity 190, of the thickness of the second layer 130 may be based on the difference between the optical densities measured by the first measurement and the second measurement, respectively. In some examples the calculation may be based on a predetermined value in place of the second measurement, for example where a sufficiently reliable estimation of the optical density of the first layer is known or may be calculated. In some examples the calculation may use a predetermined relationship (e.g. a calibration) relating a difference in optical density in the first and second measurements with the thickness of the second layer 130.

In some examples the measurements may be performed by measuring the optical density of the first layer 120 before the second layer 130 is applied. The first measurement and second measurement may be measure the same region, (i.e. the measurement region and reference region occupy an overlapping area or the same area on the substrate). In some examples, the measurement region and reference region may be different regions of the substrate. In this case, the reference region may be considered to be a proxy or approximation for the first layer in the measurement region.

The predetermined relationship may be determined by measuring the optical density of the first layer 120 in the presence of the second layer 130, and measuring the optical density of the first layer 120 alone and obtaining the difference (ΔOD). The thickness of the second layer then may be determined by a different method and associated with the obtained ΔOD. This may be repeated for different thicknesses of the second layer 130 to produce data relating ΔOD with various thicknesses of the second layer. The data may be used to generate relationship data, such as calibration data (e.g. a calibration scale or calibration curve), that may be used to determine a thickness of the second layer based on a ΔOD measurement associated with the first and second layers. The relationship may be stored on a storage medium accessible by the processor in the form of a graph, table, look-up table, etc. Interpolation and/or extrapolation may be used to determine a thickness of a second layer based on a measured ΔOD.

In some examples different relationships may be determined for different substrate types. A calibration may be performed for a particular substrate type (e.g. by a manufacturer of the substrate or of the measurement system), and provided to a user of the measurement system, e.g. by storing information describing the calibration in a storage medium accessible by the processing circuitry 190. In this manner the user may calculate the thickness of the second layer without performing a calibration. This may reduce or eliminate the need for the user to have relatively expensive equipment for performing accurate measurements of the second layer thickness. This may allow users to use commercially available densitometers to measure the thickness of layers, such as transparent inks. In other examples, a user may perform a calibration and store the result for access by the measurement system.

The predetermined relationship may be calculated by measuring ΔOD for a variety of layer thicknesses. These layer thicknesses may be measured offline using a different measurement method (e.g. confocal microscopy). The different measurement method may have a high accuracy, but may be more complicated, cumbersome and/or expensive that the optical method described above. For example, the different measurement method may require more expensive or alternative equipment than the optical method described herein.

In some examples, the predetermined relationship may be substrate dependent. That is, different relationships may be determined for respective substrates and a suitable relationship selected based on the substrate 110 that on which the second layer to be measured is provided. Similarly, the predetermined relationship may be dependent on the formulation (e.g. ink formulation) of the first and/or second layer.

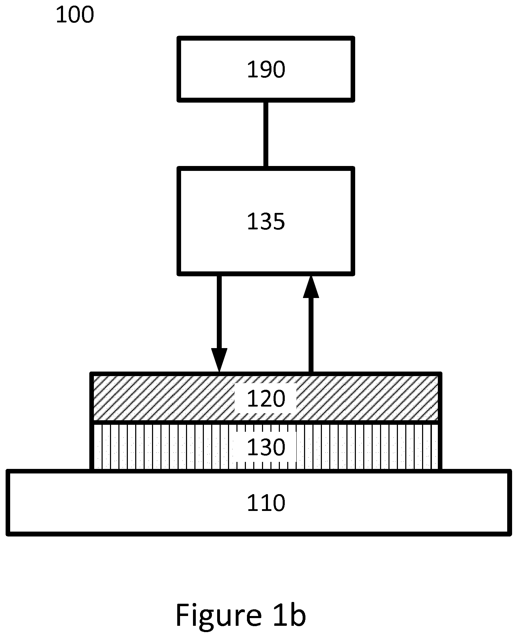

In some examples, as illustrated in Figure 1b, for example, the first layer 120 may be above the second layer 130 with respect to the substrate (that is, the second layer 130 may be between the substrate 110 and the first layer 120). In some examples the second layer 130 may be a primer (e.g. applied directly to the substrate) and the first layer 120 may be ink applied above the primer. Such an arrangement may be useful in in-line priming.

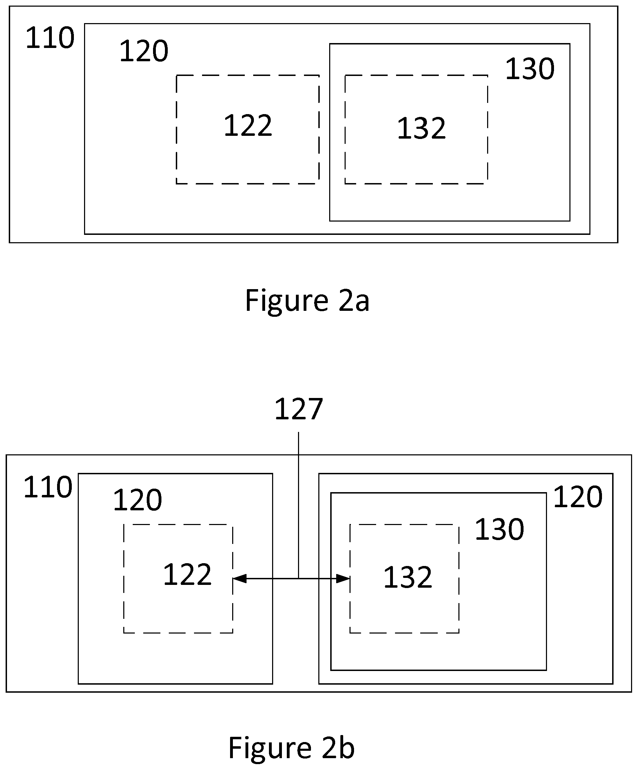

Figures 2a and 2b schematically illustrate some possible topographies of substrate 110. Figure 2a depicts substrate 110 and a first layer 120, with a second layer 130 partially covering the first layer 120. The second layer 130 may be absent from a portion of the first layer, such that a reference region 122 in that portion is not covered by the second layer 130. The first layer 120 may be exposed in the reference region 122, such that there is no covering of the first layer 130 in the reference region 122. A measurement region 132 may be covered by the first layer 120 and the second layer 130, with the second layer 130 above or over the first layer 120 with respect to the substrate 110 (i.e. the first layer 120 is between the substrate 110 and the second layer 130).

Figure 2b depicts substrate 110 where the reference region 122 and measurement region 132 are on respective different, separated, areas of first layer 120. The separated areas of first layer 120 may be produced using identical processes. The first 122 and second 132 sections may be adjacent, or may be separated by a gap 127.

In some cases, properties of the first and second layers may vary depending on their location. In such cases, a spatial separation between a reference region 122 and a measurement region 132 may be less than a predetermined threshold separation. The threshold separation may be selected such that the optical properties of the first layers 120 in the reference 122 and measurement 132 regions are essentially the same (aside from the presence of the second layer 130). According to such examples, the optical density of the first layer in the reference region may be a suitable approximation of the optical density of the first layer in the measurement region. This may improve the accuracy of the determination of the thickness of the second layer.

The first and second measurements may be performed in any order. The second measurement may be taken before, after or at the same time as the first measurement. In some examples two measurement devices 135 may be used, this may facilitate simultaneous performance of the first and second measurements.

In some examples, measurement region and the reference region may be the same or may overlap. In such examples, the second measurement may be performed before the first measurement, with the first layer being produced before the second measurement, and the second layer being produced after the second measurement and before the first measurement.

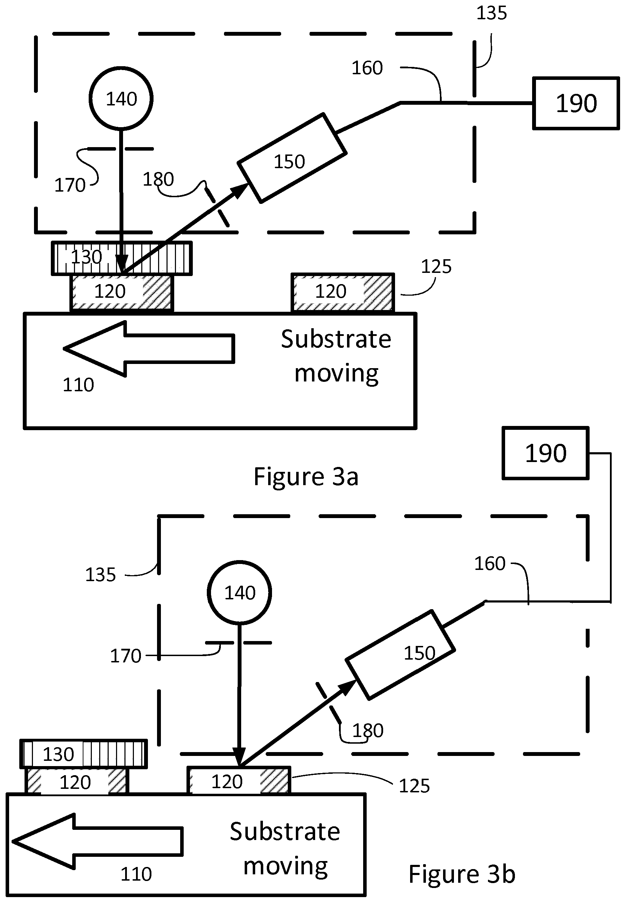

Figures 3a and 3b schematically illustrate an example of an apparatus for measurement of the thickness of a layer 130. In Figure 3a a substrate 110 is configured to move relative to apparatus 100. The substrate may have a first layer 120 having second layer 130 deposited over it (with respect to the substrate 110) in a measurement region. The substrate 110 may also have a reference layer 125 deposited on the substrate 110. The reference layer may be an uncovered area of first layer 120, provided in a reference region. The reference layer 125 and may be continuous with or spaced apart from first layer 120. A measurement device 135 is configured to measure the optical density associated with the first layer 120 in the measurement region. The measurement device 135 may include a light source 140, configured to illuminate the first layer 120. The light source may be filtered by a filter 170. The reflected light may be filtered by filter 180, and detected by a detection module 150. Other optical elements may be present, but are not illustrated here for simplicity. The filters 170, 180 may not be necessary in some examples. A signal 160 from the detection module 150, representative of light detected by the detection module 150, may be output to processing circuitry 190.

Figure 3b schematically illustrates the example of Figure 3a at a different time, when the substrate 110 has moved relative to the measurement device 135, allowing the optical density of the reference layer 125 to be measured by measuring device 135. The measuring device 135 is arranged to output signal 160 representative of the light detected by the detection module 150 to processing circuitry 190.

The processing circuitry 190 may determine the thickness of the second layer 120 based on the measured optical densities in the measurement region and the reference region. A predetermined relationship between the difference in optical densities and second layer thickness may be used to convert the difference in optical density to a thickness.

In some examples the first layer may be selected based on a detection property of the first and/or second layer. For example, the first layer (e.g. colour or composition) may be selected to provide a good (e.g. strong), or optimal, signal and/or correlation with thickness measurements. In addition a colour channel of the optical density measurement may be selected to provide a good (e.g. strong), or optimal signal.

As noted above, the difference between the measured optical densities in the measurement region and the reference region may be denoted herein as ΔOD.

The measurement may, in some examples, be made in an in-line process with an imaging system, such as a printer or a press (e.g. a liquid electro-photographic (LEP) press, an inkjet printer, toner ink printer or screen printer), so that the thickness of the transparent layer can be output to a user or monitoring apparatus in real-time, or close to real-time. This may allow the user or monitoring apparatus to efficiently control the quality of the print.

In some examples the second layer is a transparent ink. In some examples a transparent ink has dE < 15 on a white or colored substrate for a layer of maximum 2 µm thickness. Here, dE is the difference or distance between two colours, and is the square root of the L.a.b. delta.

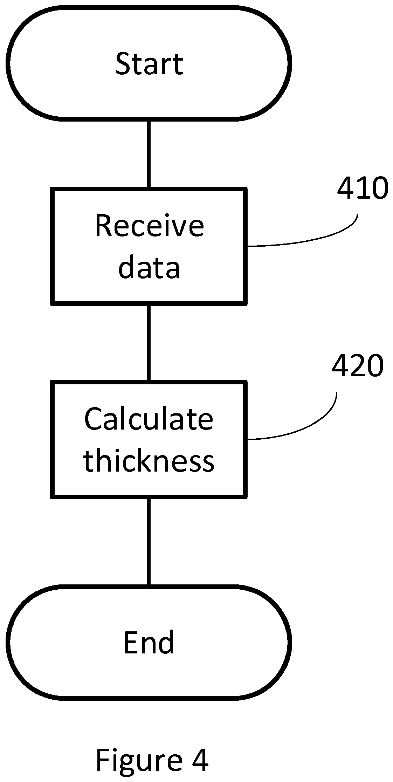

Figure 4 illustrates schematically a method according to some examples. The method may comprise receiving data 410, the data indicative of a measurement of a region of a substrate, the region having a first layer, and a second layer above the first layer, the measurement indicative of an optical density associated with the first layer. The method may further include calculating 420 a thickness of the second layer based on the received data. In some examples processing circuitry may be configured to perform the method.

In some examples the method may include a measurement representative of the optical density of the first layer that is independent of the second layer as a reference measurement.

In some examples, calculating the thickness of the second layer may be based on a difference between measurements of optical density (ΔOD) using a predetermined relationship.

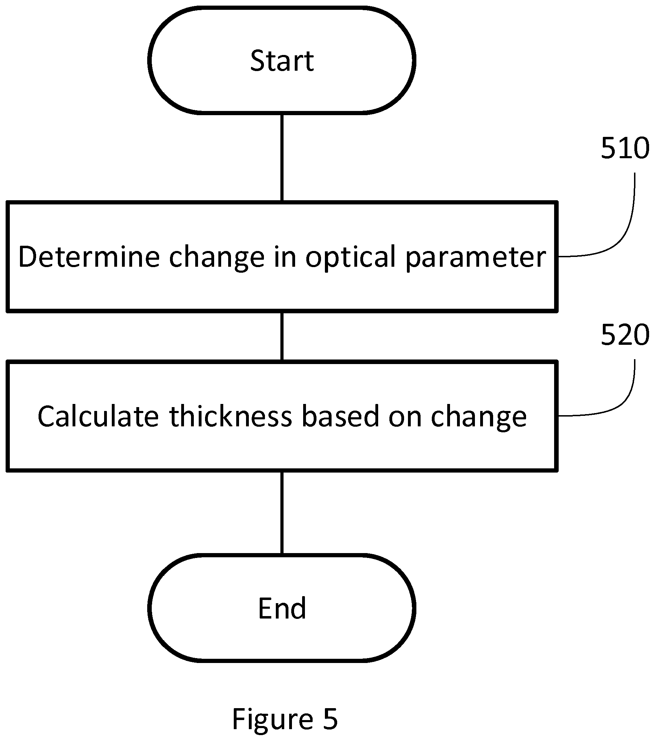

Figure 5 illustrates schematically a method according to some examples. The method may comprise determining a change in an optical parameter 510 of a first layer due to a second layer applied over the first layer and calculating the thickness 520 of the second layer based on the change in the parameter. In some examples processing circuitry may be configured to perform the method.

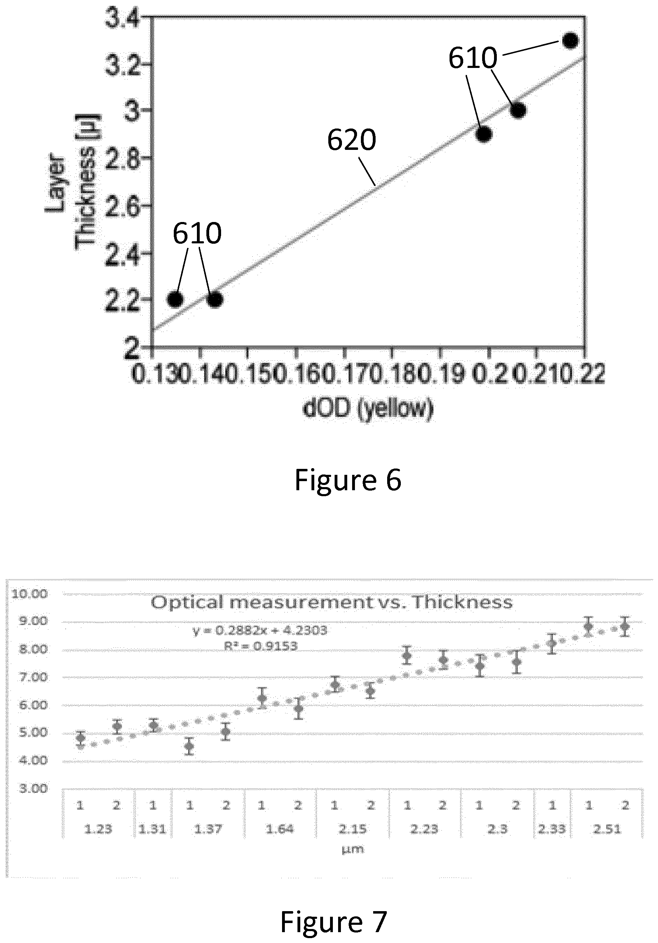

Figure 6 shows an example of derivation of a relationship between ΔOD and layer thickness. The data points 610 show measured thickness of a transparent varnish layer (y-axis) and ΔOD (x-axis). In this example the first layer (below the varnish layer) was a black ink patch and the optical densities used to derive ΔOD were measured on the yellow channel. The line 620 shows a straight line fit. The straight fit line may be used as a predetermined relationship between the thickness of the transparent varnish layer and ΔOD. The measurement of thickness was performed using confocal microscopy, in which the transparent layer was printed on a smooth medium and the thickness measured under a microscope.

Figure 7 shows an example of derivation of a relationship between thickness of the second layer and the change in measured b component (Δb) in a L.a.b. colour space. The measurement was performed on a patch of 70% yellow cover. Figure 7 shows measured data points (performed using confocal microscopy) and a best fit line. In some examples the best fit line may be used as the predetermined relationship between the optical parameter (Δb in this case) and the thickness of the second layer.

In some examples the optical parameter may be an optical density. In some examples the thickness of the second layer may be calculated using a predetermined relationship. In some examples, the calibration may be substrate dependent.

The optical density may be measured directly, in some examples an indirect measurement may be taken, for example transmission through a substrate may be measured and converted to optical density.

In some examples the calculation of thickness of the second layer may be based on a measured optical parameter other than optical density. In some examples, the optical parameter may be selected from: optical density, spectrum, a colour difference or distance, dE, dot area and gloss, wherein the optical parameters spectrum, colour difference or distance and dE are not part of the invention. A relationship may be determined between the optical parameter and the thickness of the second layer by direct measurement, and this relationship may then be used to determine the thickness of the second layer in subsequent prints.

Spectrum describes a measurement of the reflection or transmission properties of the layer as a function of wavelength. In some examples spectrum measurements may be performed at wavelengths between 380 nm and 730 nm. In some examples the measurements may be performed between 400 and 700 nm, which corresponds with the visible spectrum of the human eye. One or more filters, such as M0, M1 or M2, or other similar filters may be used. In some examples the measurement may be at angles of 2° and/or 10°.

dE describes measurements of dE in the L.a.b. colour space. However, any suitable colour difference or colour distance measurement may be used.

Gloss may be measured with a glossmeter.

Dot area the dot or halftone diameter. A change in dot area may be associated with a thickness of the second layer.

In some examples, the optical parameter may be directly related to optical density or a parameter from which optical density may be derived.

The examples herein evaluate a change between the reference region 122 and the measurement region 132 by subtracting an optical parameter measured in one region from the optical parameter measured in the other region. However, other calculations may be used and/or modification of the data may be applied. For example, in some cases a ratio of the measured optical parameters may be determined.

Examples described above may provide a simple and low cost means to determine the thickness of a layer, such as a transparent ink layer. Measurement equipment suitable for use in some examples may be present in a typical print shop or already installed in some presses (e.g. equipment for performing colour calibration). For example, the measurement device 135 may be or may include a commercially available densitometer or spectrophotometer. Examples do not require laboratory equipment or a laboratory method.

Some examples may be applied to various substrates. Some examples do not require a rigid substrate, such as metal. That is, such examples may be applied to flexible substrates. Some examples do not require electrically conductive substrates. Some examples do not require smooth or highly reflective substrates. Examples do not require a transparent substrate. Examples may be applied to determine the thickness of the second layer where the second layer does not absorb visible light. While examples may not require substrates to have the particular properties listed, the may still be suitable for use with such substrates.

Examples do not require multiple layers of ink to be formed in order to provide a thicker layer for measurement. Examples do not require removal of the film from the substrate. Examples do not require cutting or cross-sectioning of the substrate, and are not affected by distortion of the layer which may influence the layer thickness when cutting or cross-sectioning.

Some examples do not require a large print area for the layer in order to determine the layer thickness.

Examples to not require labeling (e.g. fluorescence) agents to be added to the material of the second layer. In some examples, the formulation of the second layer may be used as-is and does not need to be modified for the purposes of the thickness measurement. For example, additives that may alter other physical or chemical properties are not needed.

In some examples, the second layer may be about 1 micron thick.

In some examples, the optical density measurement may be an in-line process, which may be performed by an imaging system. Herein, an in-line process is performed by an integral part of the imaging system (e.g. press), and is performed by the imaging system independently, as part of the printing process or preparation for the printing process. This may allow rapid feedback to the user when printing, and may allow the user to monitor the printing process in real-time or close to real-time. In some examples the measurement may be performed off-line.

Relative movement of the measurement device 135 and substrate 110 may involve movement of the substrate 110 (e.g. on a substrate transport, such as a belt) while the measurement device 135 is stationary. In some examples, the substrate 110 may be stationary and the measurement device 135 moved. Both the measurement device 135 and substrate 110 may be moveable. In some examples optical elements of the measurement device may be adjusted to permit measurement in regions at different spatial positions relative to the measurement device.

Herein, ink has been used as an example of the first and second layers. The first and second layers may be any printing fluid. In some examples the first and second layers may be liquid electro-photographic printing fluid. In some examples the first and second layers may be inkjet ink. In some examples the first and second layers may be toner ink.

In some examples the first layer may be an ink, such as liquid electro-photographic ink. In some examples the second layer may be a varnish. In some examples, the second layer may be primer and the first layer ink.

In some examples the first layer may be present in the whole of, or substantially the whole of, the reference region. In some examples both the first and second layers may be present in the whole of, or substantially the whole of, the measurement region.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A method of measuring a transparent or translucent layer (130) comprising:
receiving data indicative of a first measurement of an optical parameter in a measurement region (132) of a substrate (110), the measurement region (132) having a first layer (120) and a second layer (130), the first and second layers provided one above the other with respect to the substrate (110), the second layer (130) being the transparent or translucent layer;
receiving data indicative of a reference measurement, the reference measurement indicative of the optical parameter of the first layer (120) in the absence of the second layer (130);
determining a difference between a value of the optical parameter of the first measurement and a value of the optical parameter of reference measurement;
determining a thickness of the second layer (130) based on the determined difference, wherein,
the optical parameter is selected from a list consisting of: optical density, gloss, and dot area or halftone diameter.

2. The method of claim 1, wherein the calculation of the thickness of the second layer (130) is based on a comparison between the determined difference and a predetermined relationship.

3. The method of claim 2, wherein the predetermined relationship is a substrate dependent calibration.

4. The method of any preceding claim, further comprising illuminating the measurement region (132) of the substrate (110) and measuring the optical parameter in the measurement region (132) to generate the data indicative of the first measurement.

5. The method of any preceding claim, further comprising illuminating a reference region (122) of the substrate (110) and measuring the optical parameter in the reference region (122) to generate the data indicative of the reference measurement.

6. The method of claim 5, wherein the measurement region (132) and the reference region (122) overlap or are the same region of the substrate (110), the first layer (120) produced after the reference measurement.

7. The method of claim 5, wherein the measurement region (132) and the reference region (122) are different regions of the substrate (110).

8. An imaging system configured to carry out the method of any of the previous claims comprising:
processing circuitry (190) programmed to carry out the data processing steps of any preceding claim;
a measurement device (135) including a light source (140) and a sensor (150), the sensor (150) arranged to perform the first measurement and the light source configured to perform the illumination of the measurement region (132).

9. The imaging system of claim 8, configured to make the first measurement and the determination of the thickness of the second layer (130) in-line with a printing process.

10. The imaging system of claim 8 or claim 9, wherein the first measurement is based on detection by the sensor (150) of light from the light source (140) that has been reflected from the measurement region (132).

## Patentansprüche

1. Verfahren zum Messen einer transparenten oder lichtdurchlässigen Schicht (130), das Folgendes umfasst:
Empfangen von Daten, die eine erste Messung eines optischen Parameters in einem Messbereich (132) eines Substrats (110) anzeigen, wobei der Messbereich (132) eine erste Schicht (120) und eine zweite Schicht (130) aufweist, wobei die erste und die zweite Schicht in Bezug auf das Substrat (110) übereinander angeordnet sind, wobei die zweite Schicht (130) die transparente oder lichtdurchlässige Schicht ist;
Empfangen von Daten, die eine Referenzmessung anzeigen, wobei die Referenzmessung den optischen Parameter der ersten Schicht (120) bei Fehlen der zweiten Schicht (130) anzeigt;
Bestimmen einer Differenz zwischen einem Wert des optischen Parameters der ersten Messung und einem Wert des optischen Parameters der Referenzmessung;
Bestimmen einer Dicke der zweiten Schicht (130) auf der Grundlage der ermittelten Differenz, wobei der optische Parameter aus einer Liste ausgewählt wird, die aus Folgendem besteht:
optische Dichte, Glanz und Punktfläche oder Halbtondurchmesser.

2. Verfahren nach Anspruch 1, wobei die Berechnung der Dicke der zweiten Schicht (130) auf einem Vergleich zwischen der ermittelten Differenz und einer vorgegebenen Beziehung basiert.

3. Verfahren nach Anspruch 2, wobei die vorgegebene Beziehung eine substratabhängige Kalibrierung ist.

4. Verfahren nach einem der vorhergehenden Ansprüche, das ferner ein Beleuchten des Messbereichs (132) des Substrats (110) und ein Messen des optischen Parameters im Messbereich (132) umfasst, um die Daten zu erzeugen, die die erste Messung anzeigen.

5. Verfahren nach einem der vorhergehenden Ansprüche, das ferner ein Beleuchten eines Referenzbereichs (122) des Substrats (110) und ein Messen des optischen Parameters im Referenzbereich (122) umfasst, um die Daten zu erzeugen, die die Referenzmessung anzeigen.

6. Verfahren nach Anspruch 5, wobei der Messbereich (132) und der Referenzbereich (122) den gleichen Bereich des Substrats (110) überlappen oder dieser sind, wobei die erste Schicht (120) nach der Referenzmessung erzeugt wird.

7. Verfahren nach Anspruch 5, wobei der Messbereich (132) und der Referenzbereich (122) unterschiedliche Bereiche des Substrats (110) sind.

8. Ein Bildgebungssystem, das so konfiguriert ist, dass es das Verfahren nach einem der vorhergehenden Ansprüche ausführt, wobei dasselbe Folgendes umfasst:
eine Verarbeitungsschaltung (190), die so programmiert ist, dass sie die Datenverarbeitungsschritte nach einem der vorhergehenden Ansprüche durchführt;
eine Messvorrichtung (135) mit einer Lichtquelle (140) und einem Sensor (150), wobei der Sensor (150) so angeordnet ist, dass er die erste Messung durchführt, und wobei die Lichtquelle so konfiguriert ist, dass sie die Beleuchtung des Messbereichs (132) durchführt.

9. Das Bildgebungssystem nach Anspruch 8, das so konfiguriert ist, dass die erste Messung und die Bestimmung der Dicke der zweiten Schicht (130) parallel zu einem Druckprozess durchgeführt werden.

10. Bildgebungssystem nach Anspruch 8 oder 9, wobei die erste Messung auf der Erfassung von Licht aus der Lichtquelle (140), das vom Messbereich (132) reflektiert wurde, durch den Sensor (150) beruht.

## Revendications

1. Procédé permettant de mesurer une couche transparente ou translucide (130) comprenant :
la réception des données indiquant une première mesure d'un paramètre optique dans une région de mesure (132) d'un substrat (110), la région de mesure (132) ayant une première couche (120) et une seconde couche (130), la première et la seconde couches étant disposées l'une sur l'autre par rapport au substrat (110), la seconde couche (130) étant la couche transparente ou translucide ;
la réception des données indiquant une mesure de référence, la mesure de référence indiquant le paramètre optique de la première couche (120) en l'absence de la seconde couche (130) ;
la détermination d'une différence entre une valeur du paramètre optique de la première mesure et une valeur du paramètre optique de la mesure de référence ;
la détermination d'une épaisseur de la seconde couche (130) en fonction de la différence déterminée, dans lequel le paramètre optique est sélectionné dans une liste composée de : la densité optique, la brillance et la surface de points ou le diamètre de demi-teintes.

2. Procédé selon la revendication 1, dans lequel le calcul de l'épaisseur de la seconde couche (130) est basé sur une comparaison entre la différence déterminée et une relation prédéterminée.

3. Procédé selon la revendication 2, dans lequel la relation prédéterminée est un étalonnage dépendant du substrat.

4. Procédé selon l'une quelconque des revendications précédentes, comprenant en outre l'illumination de la région de mesure (132) du substrat (110) et la mesure du paramètre optique dans la région de mesure (132) afin de générer les données indiquant le première mesure.

5. Procédé selon l'une quelconque des revendications précédentes, comprenant en outre l'illumination d'une région de référence (122) du substrat (110) et la mesure du paramètre optique dans la région de référence (122) afin de générer les données indiquant la mesure de référence.

6. Procédé selon la revendication 5, dans lequel la région de mesure (132) et la région de référence (122) se chevauchent ou sont la même région du substrat (110), la première couche (120) étant produite après la mesure de référence.

7. Procédé selon la revendication 5, dans lequel la région de mesure (132) et la région de référence (122) sont des régions différentes du substrat (110).

8. Système d'imagerie configuré pour la mise en oeuvre du procédé selon l'une quelconque des revendications précédentes, comprenant :
des circuits de traitement (190) programmés pour exécuter les étapes de traitement de données de l'une quelconque des revendications précédentes ;
un dispositif de mesure (135) comportant une source de lumière (140) et un capteur (150), le capteur (150) étant agencé pour réaliser la première mesure et la source de lumière étant configurée pour réaliser l'illumination de la région de mesure (132).

9. Système d'imagerie selon la revendication 8, configuré pour la réalisation de la première mesure et de la détermination de l'épaisseur de la seconde couche (130) conformément à un processus d'impression.

10. Système d'imagerie selon la revendication 8 ou la revendication 9, dans lequel la première mesure est basée sur la détection par le capteur (150) de la lumière provenant de la source lumineuse (140) qui a été réfléchie depuis la région de mesure (132).
